# FASCICULE DE BREVET EUROPEEN

(11) **EP 3 921 901 B1**
(45) Date de publication et mention de la délivrance du brevet: **28.02.2024**
(21) Numéro de dépôt: 20709274.3
(22) Date de dépôt: 04.02.2020
(51) Int. Cl.: H01S 3/23

(54) **SYSTÈME LASER À SUPERPOSITION TEMPORELLE D'IMPULSIONS**
LASERSYSTEM MIT ZEITLICHER ÜBERLAPPUNG VON PULSEN
LASER SYSTEM WITH TEMPORAL OVERLAP OF PULSES

(30) Priorité: 04.02.2019 FR 1901066
(43) Date de publication de la demande: 15.12.2021
(73) Titulaire: Amplitude, 33600 Pessac (FR)
(72) Inventeur: DELAIGUE, Martin, 33100 BORDEAUX (FR); HONNINGER, Clemens, 33610 CESTAS (FR); AUDOUARD, Eric, 43130 Solignac-Sous-Roche (FR)
(74) Mandataire: Jacobacci Coralis Harle
(86) Numéro de dépôt international: PCT/FR2020/050185
(87) Numéro de publication internationale: WO 2020/161433

(56) Documents cités:
- EP-A1- 2 548 690
- JP-A- 2008 205 486
- US-A1- 2008 080 859

## Description

La présente invention concerne le domaine technique des systèmes et des procédés basés sur des impulsions laser.

Document EP 2 548 690 A1 décrit un tel système laser impulsionnel.

Dans le domaine ci-dessus, on connaît différents types de lasers à impulsions. Les lasers à semiconducteurs ou les diodes laser délivrent des impulsions ayant une durée dans le domaine de la nanoseconde. Les systèmes laser à amplification à dérive de fréquence permettent d'obtenir des impulsions brèves de l'ordre de la picoseconde ou même ultrabrèves ayant une durée comprise entre environ 100 fs et quelques centaines de femtosecondes.

Les lasers à impulsions fonctionnent en général à une cadence ou fréquence de répétition des impulsions émises qui dépend techniquement de l'architecture utilisée et doit en général être adapté à l'application considérée.

Dans le présent document, on entend par durée d'une impulsion, la largeur à mihauteur du profil temporel d'intensité de l'impulsion.

Les systèmes lasers à impulsions trouvent de très nombreuses applications, par exemple dans l'usinage de matériaux par perçage, découpe et/ou surfaçage. L'optimisation de chaque procédé laser dépend d'un ensemble de paramètres du laser incluant notamment : l'énergie, la longueur d'onde, la durée d'impulsion et la cadence des impulsions. Dans ce domaine, l'utilisation d'impulsions d'une durée de quelques picoseconde ou sub-picoseconde a permis d'étendre considérablement la gamme d'applications des lasers, du fait de la mise en oeuvre de phénomènes d'interaction laser-matière différents en régime picoseconde et en régime femtoseconde (aussi appelé sub-picoseconde).

La superposition spatiale d'impulsions successives dans le temps, associée à un taux de recouvrement spatial des spots sur l'échantillon, est une technique bien connue et utilisée dans de nombreux procédés.

L'utilisation d'une double impulsion décalée dans le temps a fait l'objet de nombreuses études.

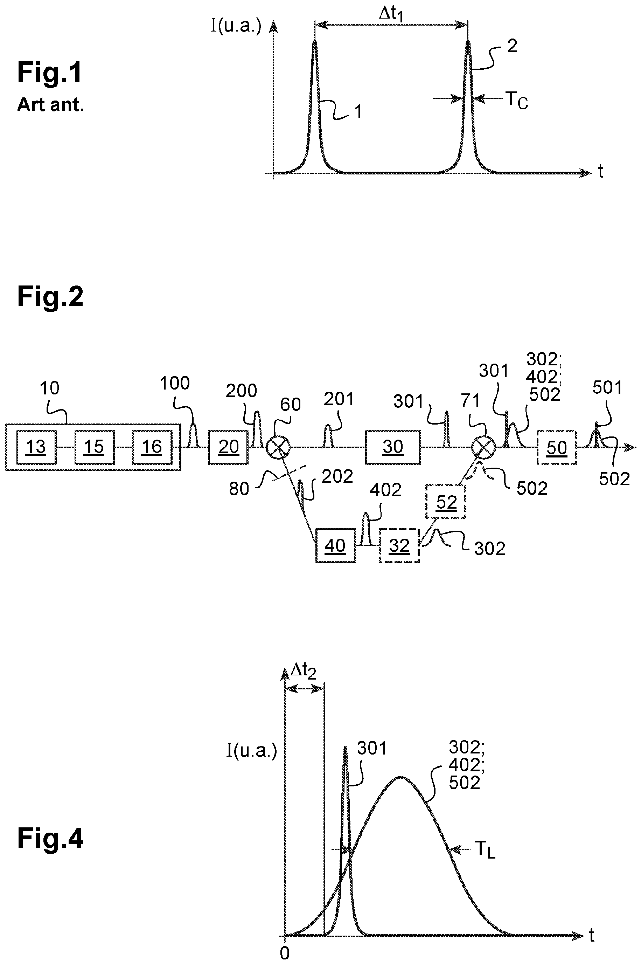

La figure 1 illustre schématiquement l'émission par un laser de l'art antérieur, d'impulsions laser en fonction du temps. Le laser délivre des impulsions séparées par une période Δt₁, entre une impulsion 1 et l'impulsion suivante 2. La période Δt₁ est en général ajustable. Les impulsions laser successives 1, 2 ont généralement la même durée Tc qui est inférieure ou très inférieure à la période Δt₁.

Récemment, l'utilisation de trains d'impulsions périodiques (appelés « burst » en anglais) a donné lieu à de nouvelles applications. L'énergie d'un train d'impulsions peut être ajustable ou pas. Les trains successifs sont séparés temporellement par une durée ajustable ou pas, selon les applications.

Toutefois, on cherche encore à améliorer la précision et/ou la vitesse des procédés d'usinage laser sans augmenter la complexité des systèmes L'invention est définie dans la revendication 1. Des modes de réalisation préférés sont divulgués dans les revendications dépendantes.
laser.

L'invention propose un système laser impulsionnel comprenant un système d'injection, un système amplificateur optique et un combineur de faisceau, le système laser impulsionnel étant adapté pour générer, d'une part, une impulsion amplifiée de durée courte comprise entre 100 fs et quelques centaines de picosecondes et, d'autre part, une autre impulsion amplifiée de durée longue ou respectivement un train d'autres impulsions amplifiées à une fréquence gigahertz ayant une enveloppe de durée longue, la durée longue étant supérieure à la durée courte et la durée longue étant comprise entre quelques picosecondes et plusieurs centaines de nanosecondes, l'impulsion impulsion amplifiée de durée courte et l'autre impulsion amplifiée de durée longue ou respectivement le train d'autres impulsions amplifiées d'enveloppe de durée longue étant issus du même système amplificateur optique et, l'impulsion amplifiée de durée courte étant, en sortie du système laser impulsionnel, superposée temporellement avec un retard relatif avec l'autre impulsion amplifiée de durée longue ou respectivement le train d'autres impulsions amplifiées d'enveloppe de durée longue, le retard relatif étant inférieur ou égal à la durée longue.

De façon avantageuse, la durée courte est comprise entre 100 fs et quelques centaines de femtosecondes et la durée longue est comprise entre cinq nanosecondes et plusieurs centaines de nanosecondes.

De préférence, l'impulsion de durée longue démarre avant l'impulsion de durée courte. Ainsi, l'impulsion de durée longue chauffe le matériau pour le préparer avant l'application de l'impulsion de durée courte. Le chauffage induit une modification du seuil d'ablation du matériau. L'impulsion de durée courte est superposée à l'impulsion longue avec un retard inférieur à la durée de l'impulsion longue. L'impulsion de durée courte ablate le matériau avec une efficacité accrue par rapport à une impulsion courte appliquée seule, sans superposition temporelle avec une impulsion longue.

L'invention trouve en particulier des applications dans le perçage de matériaux transparents, la découpe de matériaux transparents et/ou le surfaçage de matériaux tra nspa rents.

Selon un premier mode de réalisation, le système d'injection est adapté pour générer une impulsion source, le système amplificateur optique est adapté pour recevoir l'impulsion source et pour générer une impulsion amplifiée, le système laser impulsionnel comprenant un séparateur de faisceau ayant une branche d'entrée, une branche de sortie et une autre branche de sortie, le séparateur de faisceau étant disposé pour diviser l'impulsion amplifiée et former une impulsion amplifiée divisée sur la branche de sortie et une autre impulsion amplifiée divisée sur l'autre branche de sortie, un compresseur étant disposé sur la branche de sortie et adapté pour recevoir l'impulsion amplifiée divisée et générer une impulsion amplifiée comprimée de durée courte, une ligne à retard optique étant disposée sur la branche de sortie ou sur l'autre branche de sortie pour induire le retard relatif et le combineur de faisceau ayant une entrée reliée à la branche de sortie du séparateur de faisceau pour recevoir l'impulsion amplifiée comprimée de durée courte et une autre entrée reliée à l'autre branche de sortie du séparateur de faisceau pour recevoir l'autre impulsion amplifiée divisée de durée longue.

Avantageusement, l'impulsion amplifiée comprimée de durée courte a une durée comprise entre 100 fs et quelques centaines de femtosecondes et l'autre impulsion amplifiée divisée de durée longue a une durée comprise entre cinq nanosecondes et plusieurs centaines de nanosecondes.

Selon un aspect particulier du premier mode de réalisation, le système laser impulsionnel comporte en outre un autre compresseur disposé sur l'autre branche de sortie en amont du combineur de faisceau, l'autre compresseur étant adapté pour comprimer temporellement l'autre impulsion amplifiée divisée.

Selon un autre aspect particulier du premier mode de réalisation, le système laser impulsionnel comporte un système optique non linéaire disposé sur l'autre branche de sortie du séparateur de faisceau en amont du combineur de faisceau, le système optique non linéaire étant adapté pour convertir en longueur d'onde l'autre impulsion amplifiée divisée.

Selon un deuxième mode de réalisation, le système d'injection comprend un injecteur, un autre injecteur et un système de synchronisation électronique entre l'injecteur et l'autre injecteur, l'injecteur étant adapté pour générer une impulsion source de durée courte comprise entre 100 fs et quelques centaines de picosecondes, l'autre injecteur étant adapté pour générer une autre impulsion source de durée longue, la durée longue étant comprise entre 5 ns et plusieurs centaines de ns, le système de synchronisation électronique étant adapté pour induire un retard entre l'impulsion source et l'autre impulsion source inférieur ou égal à la durée longue, le combineur de faisceau étant adapté pour superposer spatialement et temporellement l'impulsion source et l'autre impulsion source, le système amplificateur optique étant adapté pour recevoir l'impulsion source et l'autre impulsion source superposées temporellement et pour générer une impulsion amplifiée de durée courte et une autre impulsion amplifiée de durée longue superposées temporellement.

Avantageusement, l'impulsion source de durée courte a une durée comprise entre 100 fs et quelques centaines de femtosecondes.

De façon optionnelle, dans le deuxième mode de réalisation, le système laser impulsionnel comporte un compresseur disposé en aval du système amplificateur optique, le compresseur étant adapté pour recevoir l'impulsion amplifiée de durée courte et générer une impulsion amplifiée comprimée de durée courte.

Selon un autre aspect particulier du deuxième mode de réalisation, l'autre injecteur comporte un oscillateur ou une diode laser ou une source laser sur circuit intégré.

Selon un autre mode de réalisation, le système d'injection comprend un injecteur, une source gigahertz et un système de synchronisation électronique entre l'injecteur et la source gigahertz , l'injecteur étant adapté pour générer une impulsion source de durée courte comprise entre 100 fs et quelques centaines de picosecondes, la source gigahertz étant adaptée pour générer un train d'autres impulsions source gigahertz ayant une enveloppe de durée longue comprise entre 5 ns et plusieurs centaines de ns, le système de synchronisation électronique étant adapté pour induire un retard entre l'impulsion source et le train d'impulsions source gigahertz, le combineur de faisceau étant adapté pour superposer spatialement et temporellement l'impulsion source et le train d'autres impulsions source gigahertz, le système amplificateur optique étant adapté pour recevoir l'impulsion source et le train d'autres impulsions source gigahertz superposés temporellement et pour générer l'impulsion amplifiée superposée temporellement avec le train d'autres impulsions amplifiées, un compresseur étant adapté pour recevoir l'impulsion amplifiée et générer une impulsion amplifiée comprimée.

De façon avantageuse, dans ce mode de réalisation, l'impulsion source de durée courte a une durée comprise entre 100 fs et quelques centaines de femtosecondes.

Selon un aspect particulier du deuxième mode de réalisation, l'injecteur comporte un oscillateur et un modulateur optique.

Selon un autre aspect particulier du deuxième mode de réalisation, le système laser impulsionnel comprend un dispositif de retard optique disposé en amont du combineur de faisceau.

Selon un autre aspect particulier de l'un quelconque des modes de réalisation, le système laser impulsionnel comporte un atténuateur optique ou un modulateur optique adapté pour moduler en amplitude l'impulsion amplifiée de durée courte et/ou l'autre impulsion amplifiée, respectivement le train d'autres impulsions amplifiées.

Selon un autre aspect particulier, le combineur de faisceau est un choisi parmi un coupleur optique, un polariseur, un composant dichroïque, un filtre interférentiel ou un composant optique non linéaire.

Selon un autre aspect particulier, le système laser impulsionnel comporte un convertisseur optique non linéaire de fréquence disposé pour recevoir l'impulsion amplifiée de durée courte et générer une impulsion amplifiée convertie en longueur d'onde de durée courte.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig. 1] représente schématiquement des impulsions laser successives brèves ou ultrabrèves générées par un système laser de l'art antérieur,
[Fig. 2] représente schématiquement un système laser à impulsions superposées temporellement selon un premier mode de réalisation,
[Fig. 3] représente schématiquement un système laser à impulsions superposées temporellement selon une variante du premier mode de réalisation,
[Fig. 4] représente schématiquement l'énergie d'une impulsion courte et d'une impulsion longue, superposées temporellement avec un retard relatif Δt₂, selon le premier mode de réalisation,
[Fig. 5] représente schématiquement un système laser à impulsions superposées temporellement selon un deuxième mode de réalisation,
[Fig. 6] représente schématiquement un exemple d'injecteur utilisé dans le deuxième mode de réalisation,
[Fig. 7] représente schématiquement un autre exemple d'injecteur utilisé dans une variante du deuxième mode de réalisation,
[Fig. 8] représente schématiquement l'énergie d'une ou de plusieurs impulsions courtes et d'une impulsion longue, superposées spatialement et temporellement avec un relatif Δt₂ selon le deuxième mode de réalisation,
[Fig. 9] représente schématiquement l'énergie d'un train d'impulsions ayant une enveloppe longue et d'une impulsion courte, superposées temporellement avec un retard relatif Δt₂ selon une variante du deuxième mode de réalisation.

Il est à noter que sur ces figures les éléments structurels et/ou fonctionnels communs aux différentes variantes peuvent présenter les mêmes références.

Nous décrivons de manière détaillée différents modes de réalisation.

Dans la suite du présent document, l'architecture du système laser impulsionnel est en partie basée sur une amplification à dérive de fréquence. Dans ce type d'architecture, un étireur étire temporellement une impulsion en utilisant les propriétés spectrales de cette impulsion, un système amplificateur optique amplifie l'impulsion étirée pour générer une impulsion amplifiée de forte énergie et un compresseur en bout de chaîne recomprime temporellement l'impulsion amplifiée pour générer une impulsion ultra-brève de forte puissance.

La figure 2 représente schématiquement un premier mode de réalisation d'un système laser impulsionnel.

Plus précisément, selon le premier mode de réalisation, le système laser impulsionnel comprend un système d'injection 10, un système amplificateur optique 20, un séparateur de faisceau 60, un compresseur 30, une ligne à retard optique 40 et un combineur de faisceau 71.

Le système d'injection 10 comprend un oscillateur 13, un étireur 15 et un modulateur optique 16. L'oscillateur 13 génère des impulsions à une cadence pouvant aller jusqu'à environ 100 MHz. L'étireur 15 étire temporellement chaque impulsion de l'oscillateur tout en conservant la même cadence. Le modulateur optique 16 permet de sélectionner une ou plusieurs impulsions source 100 en amont du système amplificateur optique 20.

Par exemple, le système amplificateur optique 20 reçoit une impulsion source 100, l'amplifie et délivre une impulsion amplifiée 200. Le système amplificateur optique 20 comporte un ou plusieurs amplificateurs optiques, par exemple un préamplificateur suivi d'un amplificateur optique de puissance. L'impulsion amplifiée 200 peut avoir une durée plus courte que l'impulsion source 100, par effet de rétrécissement spectral de l'impulsion dans le milieu amplificateur lorsque la largeur de bande de gain du milieu amplificateur est plus étroite que la largeur spectrale de l'impulsion source 100. De façon alternative, l'impulsion amplifiée 200 peut présenter une durée analogue à celle de l'impulsion source 100.

Le séparateur de faisceau 60 est de préférence un composant optique passif. A titre d'exemple, le séparateur de faisceau 60 comprend un coupleur-séparateur en amplitude ayant au moins une branche d'entrée et deux branches de sorties. Le séparateur de faisceau 60 reçoit l'impulsion amplifiée 200 sur la branche d'entrée. Le séparateur de faisceau 60 est adapté pour diviser en amplitude l'impulsion amplifiée 200 en une impulsion amplifiée divisée 201 se propageant sur une branche de sortie et une autre impulsion amplifiée divisée 202 se propageant sur une autre branche de sortie. En variante, le séparateur de faisceau 60 comprend un dispositif polarisant, par exemple un polariseur et/ou une lame de phase, configuré pour séparer en polarisation l'impulsion amplifiée 200 en une impulsion amplifiée divisée 201 suivant un état de polarisation et une autre impulsion amplifiée divisée 202 suivant un autre état de polarisation. Selon une autre variante, le séparateur de faisceau 60 comprend un miroir dichroïque ou un filtre interférentiel, adapté pour séparer en longueur d'onde l'impulsion amplifiée 200 en une impulsion amplifiée divisée 201 à une longueur d'onde et une autre impulsion amplifiée divisée 202 à une autre longueur d'onde.

De façon avantageuse, le séparateur de faisceau 60 permet de faire varier et d'ajuster l'amplitude de l'impulsion amplifiée divisée 201 par rapport à l'amplitude de l'autre impulsion amplifiée divisée 202. En option, un atténuateur 80 est disposé sur l'une ou l'autre des branches de sortie. Cet atténuateur 80 permet d'ajuster l'amplitude de l'impulsion amplifiée divisée 201 par rapport à l'amplitude de l'autre impulsion amplifiée divisée 202 indépendamment du séparateur de faisceau 60.

Dans le mode de réalisation illustré sur la figure 2, l'impulsion amplifiée divisée 201 est dirigée sur une branche de sortie du séparateur de faisceau 60 vers le compresseur 30 tandis que l'autre impulsion amplifiée divisée 202 est dirigée sur une autre branche de sortie du séparateur de faisceau 60 vers la ligne à retard optique 40. Le compresseur 30 reçoit l'impulsion amplifiée divisée 201 et délivre une impulsion amplifiée comprimée 301 qui est de durée courte. La durée Tc de l'impulsion amplifiée comprimée 301 est comprise entre 100 fs et quelques ps. De façon particulièrement avantageuse, la durée Tc de l'impulsion amplifiée comprimée 301 est comprise entre 100 fs et quelques centaines de femtosecondes. La ligne à retard optique 40 reçoit l'autre impulsion amplifiée divisée 202, sans passer par le compresseur 30, et transmet une impulsion amplifiée retardée 402 ayant une durée longue, notée T_{L} , comprise entre quelques ps et 1 ns, avec un retard Δt₂ inférieur ou égal à la durée T_{L} de l'impulsion amplifiée retardée 402 de durée longue. Dans un même système laser selon la présente divulgation, le rapport de durée entre l'impulsion longue et l'impulsion courte est compris entre 1 et 10000, sa valeur étant déterminée en fonction de l'application.

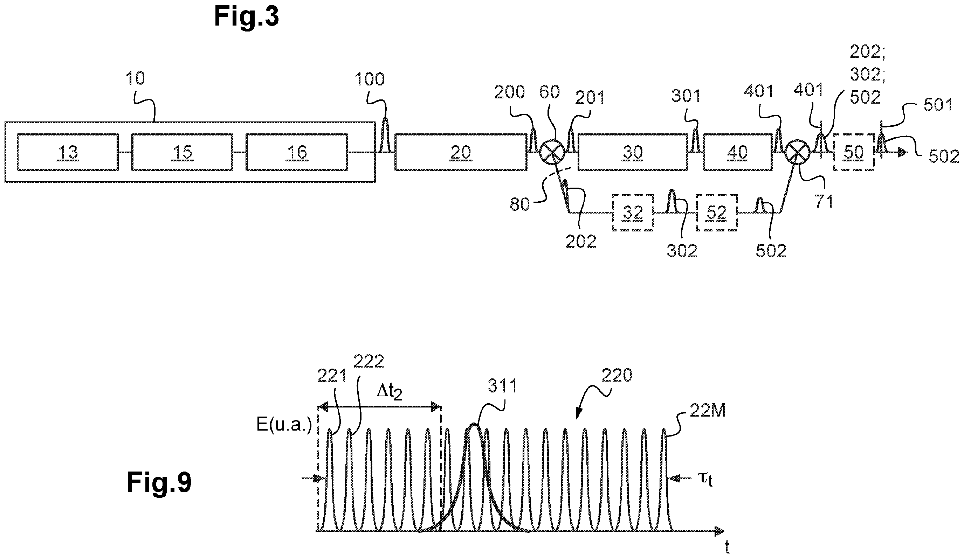

Selon une variante illustrée sur la figure 3, la ligne à retard 40 est disposée sur la même branche que le compresseur 30 en amont du combineur de faisceau 71. Dans cette variante, l'impulsion amplifiée divisée 201 est dirigée vers le compresseur 30 et la ligne à retard 40 tandis que l'autre impulsion amplifiée divisée 202 est dirigée directement vers le combineur de faisceau 71. Dans ce cas, le compresseur 30 reçoit l'impulsion amplifiée divisée 201 et délivre une impulsion amplifiée comprimée 301 qui est de durée courte. La ligne à retard optique 40 reçoit l'impulsion amplifiée comprimée 301 et transmet une impulsion amplifiée comprimée 401 retardée avec un retard Δt₂ inférieur ou égal à la durée T_{L} de l'autre impulsion amplifiée divisée 202 qui forme une impulsion amplifiée longue.

Dans le premier mode de réalisation illustré sur les figures 2 et 3, le combineur de faisceau 71 est disposé en aval du système amplificateur optique 20 et de la ligne à retard 40.

Dans le mode de réalisation illustré en figure 2, le combineur de faisceau 71 recombine l'impulsion amplifiée comprimée 301 avec l'impulsion amplifiée retardée 402, qui est de durée longue, en les superposant spatialement et temporellement avec le retard relatif Δt₂.

Dans le mode de réalisation illustré en figure 3, le combineur de faisceau 71 recombine l'impulsion amplifiée comprimée 401 retardée du retard Δt₂ avec l'autre impulsion amplifiée divisée 202 qui est de durée longue en les superposant spatialement et temporellement avec le retard relatif Δt₂.

Le combineur de faisceau 71 est un composant optique passif ayant deux voies d'entrée et une voie de sortie pour superposer spatialement l'impulsion amplifiée comprimée 301, respectivement 401, de durée courte et l'impulsion amplifiée 402, respectivement 202, de durée longue, avec un retard relatif Δt₂ entre l'impulsion amplifiée comprimée courte et l'impulsion amplifiée longue.

Dans un exemple de réalisation, le combineur de faisceau 71 comprend un coupleur ayant au moins deux entrées et une sortie. Le combineur de faisceau 71 est adapté pour superposer en amplitude l'impulsion amplifiée comprimée 301 courte, respectivement 401, et l'impulsion amplifiée longue 402, respectivement 202, avec le retard relatif Δt₂. En variante, le combineur de faisceau 71 comprend un polariseur configuré pour recombiner en polarisation l'impulsion amplifiée comprimée courte suivant un état de polarisation avec l'impulsion amplifiée longue suivant un autre état de polarisation. Selon une autre variante, le combineur de faisceau 71 comprend un miroir ou un filtre dichroïque ou un filtre interférentiel, adapté pour recombiner l'impulsion amplifiée courte à une longueur d'onde et l'impulsion amplifiée longue à une autre longueur d'onde.

Dans un mode de réalisation particulier, le combineur de faisceau 71 peut aussi permettre de faire varier et d'ajuster l'amplitude de l'impulsion amplifiée courte par rapport à l'amplitude de l'impulsion amplifiée longue. Cependant, l'introduction de cette fonction d'ajustement en amplitude à ce niveau est susceptible d'induire des pertes et une diminution de la puissance maximale accessible.

Dans un exemple de réalisation, la ligne à retard optique 40 ajoute un retard Δt₂ fixe et prédéterminé. La ligne à retard optique 40 est réalisée à partir de composants optiques, par exemple des miroirs, pour permettre d'obtenir une retard Δt₂ compris dans une gamme entre 1 ps et 100 ns avec une précision meilleure que 200 femtosecondes. La ligne à retard optique 40 permet de superposer l'impulsion amplifiée comprimée 301 courte, ou respectivement 401, avec une impulsion amplifiée longue 402, ou respectivement 202. La position temporelle de l'impulsion amplifiée comprimée courte relativement à l'impulsion amplifiée longue est déterminée précisément en fonction du retard Δt2, comme illustré sur la figure 4. Sur la figure 4, le retard Δt2 est indiqué en valeur absolue entre le début de l'impulsion amplifiée comprimée courte et le début de l'impulsion amplifiée longue à l'entrée du combineur de faisceau 71. Dans le présent document, on entend par « début d'une impulsion » l'instant où l'intensité de l'impulsion est égale à une fraction prédéterminée du maximum de cette impulsion, par exemple de 10 % du maximum.

De façon avantageuse, le retard Δt₂ est supérieur ou égal à un quart ou à la moitié ou encore aux trois-quarts de la durée longue T_{L} de l'autre impulsion amplifiée divisée 202, qui forme une impulsion amplifiée longue. Par exemple, pour une impulsion longue de durée égale à 100 ns, le retard Δt₂ est d'au moins 25 ns et de préférence d'au moins 50 ns. De cette manière, l'impulsion amplifiée longue irradie le matériau exposé avant le début de l'impulsion amplifiée courte.

Selon une variante particulière et avantageuse, la ligne à retard optique 40 présente un retard Δt₂ variable, qui permet d'ajuster le retard entre l'impulsion amplifiée et comprimée courte et l'impulsion amplifiée longue. Une ligne à retard optique 40 variable est par exemple réalisée simplement au moyen de plusieurs miroirs, un des miroirs étant monté sur une platine de translation motorisée pour obtenir une variation de longueur du trajet optique et donc un délai réglable entre l'impulsion amplifiée courte et l'impulsion amplifiée longue.

Un avantage du premier mode de réalisation est de délivrer l'impulsion amplifiée comprimée courte et l'impulsion amplifiée longue sur deux voies séparées spatialement après amplification. Cette séparation permet de modifier indépendamment l'impulsion amplifiée et comprimée courte et/ou l'impulsion amplifiée longue avant de les recombiner via le combineur de faisceau 71.

Selon une variante du premier mode de réalisation, le système laser comporte en outre un convertisseur optique non-linéaire de fréquence 50 disposé en aval du combineur de faisceau 71. Le convertisseur optique non-linéaire de fréquence 50 est par exemple un générateur de fréquence somme, générateur de fréquence double ou plus généralement un générateur d'harmoniques multiples. Par exemple, le convertisseur optique non-linéaire de fréquence 50 comporte un ou plusieurs cristaux doubleurs de fréquence pour changer la longueur d'onde. Ainsi, on peut par exemple passer d'une longueur d'onde initiale de 1030 nm à une longueur d'onde de 515 nm par doublage de fréquence (ou SHG pour « second-harmonie génération » en anglais) ou de 343 nm à la fréquence triple ou de 257 nm à la fréquence quadruple. Un tel convertisseur optique non-linéaire de fréquence 50 est très sensible à la puissance crête du faisceau incident. En plaçant le (ou les) cristaux doubleurs de fréquence en fin de chaîne, on favorise la conversion de fréquence de l'impulsion courte plus énergétique, c'est-à-dire de l'impulsion amplifiée courte 301, en une impulsion amplifiée courte 501 convertie en fréquence. Dans ce cas, l'impulsion amplifiée longue n'est pas convertie en fréquence optique. Le convertisseur optique non-linéaire de fréquence 50 permet ainsi de convertir en fréquence sélectivement l'impulsion amplifiée courte indépendamment de l'impulsion amplifiée longue. Le convertisseur optique non-linéaire de fréquence 50 n'introduit pas de décalage temporel supplémentaire entre l'impulsion amplifiée courte 501 convertie en fréquence et l'impulsion amplifiée longue.

De façon alternative ou complémentaire, on dispose un autre convertisseur optique non-linéaire de fréquence 52 sur le trajet de l'autre impulsion amplifiée divisée 202, de manière à convertir en fréquence l'impulsion amplifiée longue 202, ou l'impulsion amplifiée longue 402 retardée, en amont du combineur de faisceau 71 pour former une impulsion amplifiée longue 502 convertie en fréquence, par exemple doublée ou triplée en fréquence optique. Le convertisseur optique non-linéaire de fréquence 52 permet de convertir en fréquence optique l'impulsion amplifiée longue indépendamment de l'impulsion amplifiée courte.

Dans tous les cas, il convient généralement d'ajouter un miroir dichroïque en aval de chaque convertisseur optique non-linéaire de fréquence 50 et/ou 52 pour éliminer la fraction de l'énergie incidente non convertie, en particulier les longueurs d'onde du faisceau résiduel dans l'infrarouge.

Selon une variante du premier mode de réalisation, le système laser comporte en outre un autre compresseur 32 sur le trajet de l'autre impulsion amplifiée divisée 202, de manière à comprimer temporellement l'impulsion amplifiée longue, c'est-à-dire l'impulsion amplifiée longue 202 ou 402, en amont du combineur de faisceau 71 et former une autre impulsion amplifiée comprimée 302 ayant une durée longue inférieure à 100 ps, par exemple comprise entre 1 ps et 70ps. Cette variante permet de comprimer temporellement l'impulsion amplifiée longue indépendamment de l'impulsion amplifiée courte, par exemple pour ajuster le rapport de durée entre l'impulsion amplifiée courte et l'impulsion amplifiée longue.

En résumé, le premier mode de réalisation permet d'appliquer un retard relatif entre l'impulsion amplifiée courte et l'impulsion amplifiée longue, qui sont amplifiées dans le même système amplificateur optique 20. En option, le premier mode de réalisation permet de convertir en fréquence l'impulsion amplifiée courte indépendamment de l'impulsion amplifiée longue et vice versa.

La figure 4 illustre un exemple de superposition temporelle d'une impulsion amplifiée courte 301 et d'une impulsion amplifiée longue 302, 402 ou 502 obtenue au moyen d'un système laser selon le premier mode de réalisation, l'impulsion amplifiée courte 301 et l'impulsion amplifiée longue étant décalées temporellement du retard relatif Δt₂ de manière à ce que le matériau à usiner soit exposé au début de l'impulsion amplifiée longue pendant une durée égale au retard relatif Δt₂ avant d'être exposé à l'impulsion amplifiée courte.

Dans un exemple d'application du premier mode de réalisation, l'impulsion amplifiée comprimée 301 a une durée courte Tc comprise entre environ 100 fs et 500 fs. L'injecteur 10, le système amplificateur optique 20 et le séparateur de faisceau 60 forment l'impulsion amplifiée divisée 201 et l'autre impulsion amplifiée divisée 202, de durée T_{L} comprise entre 20 ps et quelques centaines de ns, entre 5ns et 100ns, ou entre 20 ps 1 ns, ou entre 20 ps et 700 ps, et par exemple entre 50 ps et 150 ps. Le compresseur 30 comprime l'impulsion amplifiée divisée 201 pour former l'impulsion amplifiée comprimée 301 de durée courte Tc comprise entre 100 fs et 500 fs. La ligne à retard optique 40 retarde l'autre impulsion amplifiée divisée 202 et forme l'impulsion amplifiée longue 402 retardée de Δt₂. La ligne à retard optique 40 permet de régler le retard Δt2 entre l'impulsion amplifiée comprimée 301 courte et l'impulsion amplifiée longue 402. Le combineur de faisceau 71 superpose spatialement et temporellement l'impulsion amplifiée courte 301 et l'impulsion amplifiée longue 402 avec le retard Δt2. Le système laser a par exemple une puissance moyenne de 100W. L'énergie totale des impulsions amplifiées 301 et 402 est de préférence ajustable entre 100 µJ et 50 mJ. La répartition d'énergie est par exemple de 50/50 entre l'impulsion amplifiée courte 301 et l'impulsion amplifiée longue 402. Bien entendu, un autre ajustement du séparateur de faisceau 60 et/ou du combineur de faisceau 71 permet d'obtenir une autre répartition d'énergie entre l'impulsion amplifiée courte 301 et l'impulsion amplifiée longue 402. La cadence de l'injecteur 10 est comprise entre environ 100 kHz et 2 MHz. A la cadence de 100 kHz, l'énergie mise à disposition est de 1mJ pour 100W de puissance moyenne. En option, un autre compresseur 32 disposé sur la ligne à retard optique 40 en amont du combineur de faisceau 71 permet de réduire la durée de l'impulsion amplifiée longue 402 à une valeur inférieure à 70 ps.

En sortie du combineur de faisceau 71, on obtient ainsi une superposition temporelle d'une impulsion amplifiée de durée courte, généralement femtoseconde, et d'une impulsion amplifiée longue, de durée ps ou ns, avec un retard Δt2 de préférence ajustable. Cette superposition temporelle d'une impulsion amplifiée comprimée courte et d'une impulsion amplifiée longue permet d'atteindre de nouveaux régimes d'interaction laser-matière. En particulier, l'application du début d'une impulsion longue permet de chauffer le matériau, et de modifier son seuil d'ablation, puis la superposition temporelle d'une impulsion courte permet d'ablater le matériau plus efficacement qu'avec une impulsion courte seule.

En effet, les procédés laser en mode ultra-bref sont connus pour mettre en oeuvre plusieurs types de mécanismes d'interaction laser matière agissant sur des constantes de temps différentes soit plutôt brèves (fs/ps) soit plus longues (ns/µs/ms). En particulier les conséquences de l'irradiation laser sur les cinétiques d'élévation de température et/ou d'ablation des matériaux sont très dépendantes de la durée des impulsions.

De plus, la possibilité de disposer de longueurs d'onde différentes pour l'impulsion amplifiée comprimée 301, 401, 501 de durée courte et/ou l'impulsion amplifiée 302, 402 ou 502 de durée longue par génération de fréquence somme permet d'obtenir une fréquence optique double ou triple, autrement dit une longueur d'onde divisée par 2 ou 3. Cette conversion de fréquence optique permet de disposer d'un paramètre supplémentaire de contrôle de ces mécanismes d'interaction laser-matière, et en particulier de l'ablation laser.

Cette mise en forme temporelle, également du fait des caractéristiques physiques de l'interaction, permet un pilotage dans le temps de la distribution de l'énergie appliquée à un matériau.

En résumé, le système laser selon le premier mode de réalisation permet de délivrer au moins deux impulsions amplifiées par un même système amplificateur optique et superposées temporellement, une impulsion amplifiée étant de durée courte, de préférence femtoseconde, et une autre impulsion amplifiée étant de durée longue, picoseconde ou nanoseconde, l'impulsion amplifiée de durée courte étant appliquée avec un retard temporel par rapport à l'impulsion longue, le retard temporel étant inférieur à la durée de l'impulsion longue.

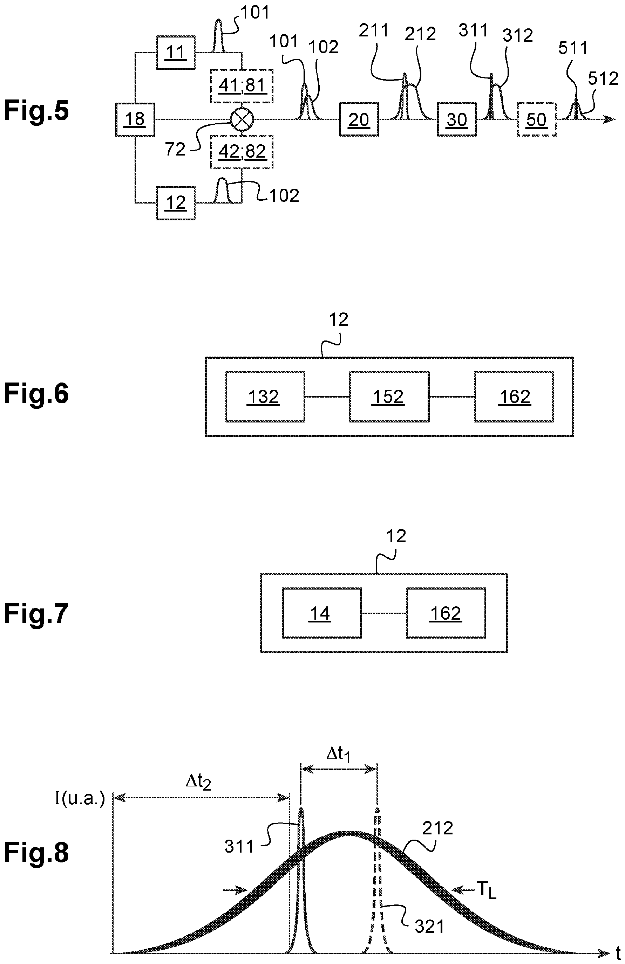

La figure 5 représente schématiquement un deuxième mode de réalisation d'un système laser impulsionnel.

Ce deuxième mode de réalisation repose sur la combinaison de deux injecteurs : un injecteur 11, de préférence analogue à l'injecteur 10 décrit en lien avec la figure 2 et un autre injecteur 12 ou injecteur auxiliaire. L'injecteur 11 délivre une impulsion source 101 de durée courte femtoseconde. L'autre injecteur 12 délivre une autre impulsion source 102, de durée longue picoseconde ou nanoseconde. En fonction du choix de la durée pour l'impulsion longue, l'autre injecteur 12 peut comporter un étireur. Le compresseur 30 est en général adapté à l'étireur de l'injecteur 11 pour générer une impulsion comprimée 311 de durée femtoseconde. En option, l'injecteur 11 et/ou l'autre injecteur 12 comportent un préamplificateur optique.

Un système de synchronisation électronique 18 permet d'ajuster électroniquement le retard Δt₂ entre l'impulsion source 101 courte et l'autre impulsion source 102 longue. La précision d'un retard obtenu par moyen électronique est en général plus faible que par un moyen optique tel qu'une ligne à retard optique. Cette précision est de l'ordre de 1 ns avec un système électronique conventionnel. Cependant un système électronique existant plus élaboré permet d'obtenir une précision jusqu'à la centaine de picoseconde. Dans le cas où l'autre impulsion source 102 a une durée longue supérieure ou égale à 1 ns, une telle précision est très convenable. On connaît aussi un dispositif électronique (appelé «synchrolock» en anglais) de haute précision qui permet une synchronisation de l'ordre de la fs et qui convient par exemple pour un injecteur 12 de type oscillateur à blocage de modes opérant dans le domaine du MHz ou du GHz.

Dans le deuxième mode de réalisation, un combineur de faisceau 72 est disposé en amont du système amplificateur optique 20. Le combineur de faisceau 72 superpose spatialement et temporellement l'impulsion source 101 courte et l'autre impulsion source 102 longue avec le retard Δt2 défini par le système de synchronisation 18.

Le combineur de faisceau 72 comprend avantageusement un polariseur, l'injecteur 11 générant une impulsion source 101 courte polarisée suivant un état de polarisation et l'autre injecteur 12 générant une autre impulsion source 102 longue polarisée suivant un autre état de polarisation transverse. De façon alternative, le combineur de faisceau 72 est un composant spectral, par exemple un miroir dichroïque ou un filtre interférentiel.

Selon un aspect particulier et avantageux, un atténuateur 81, respectivement 82, est disposé entre le combineur de faisceau 72 et l'injecteur 11, respectivement l'autre injecteur 12. L'atténuateur 81, respectivement 82, permet d'ajuster l'énergie de l'impulsion source 101 courte, respectivement de l'autre impulsion source 102 longue. En variante, l'ajustement en énergie peut aussi se faire par le combineur de faisceau 72. A cet effet, l'atténuateur ou le combineur de faisceau peut être choisi parmi un miroir dichroïque qui permet de modifier la courbe de transmission/réflexion en fonction de l'angle d'incidence, un filtre interférentiel de largeur spectrale variable ou encore un composant polarisant. L'ajustement en énergie de l'impulsion source 101 courte et/ou de l'autre impulsion source 102 longue permet d'ajuster la proportion de la contribution de l'impulsion source courte et de l'autre impulsion source longue dans la superposition obtenue en sortie du système laser.

Dans un exemple du deuxième mode de réalisation, l'impulsion source courte 101 est de durée fs. Une diode laser à grande bande passante du commerce génère l'autre impulsion source 102 de durée longue T_{L} comprise entre 5 ns et plusieurs centaines de ns. Une durée T_{L} inférieure de 5 ns peut être obtenue moyennant une modification de l'électronique. La superposition spatiale de l'impulsion source 101 et de l'autre impulsion source 102 est non ajustable. Il est notamment possible que le faisceau ns et le faisceau fs n'aient pas exactement la même taille du fait des effets de Kerr sur l'impulsion fs. En aval du combineur de faisceau 72, l'impulsion source 101 courte et l'autre impulsion source 102 longue sont superposées spatialement au moins partiellement et temporellement avec un retard relatif. Plus précisément, l'impulsion source 101 courte est superposée à l'autre impulsion source 102 longue après un délai ou retard, ce délai ou retard étant inférieur à la duré de l'autre impulsion source 102 longue.

La durée de l'autre impulsion source 102 peut être ajustée entre 5 ns et plusieurs centaines de ns. Néanmoins, si la durée de l'autre impulsion source 102 longue est supérieure à 300 ns, la cadence maximale accessible peut être réduite.

Le système de synchronisation électronique 18 permet d'ajuster électroniquement le délai entre l'impulsion source 101 courte et l'autre impulsion source 102 longue, avec une précision de l'ordre de 1 ns.

L'énergie totale cumulée de l'impulsion source courte 101 et de l'autre impulsion source 102 longue est variable de 1 µJ à 50 mJ.

Le système amplificateur optique 20 amplifie en même temps l'impulsion source courte 101 et l'autre impulsion source 102 longue. Autrement dit, les deux impulsions source, courte et longue, sont amplifiées dans le système amplificateur optique 20 qui génère une impulsion amplifiée 211 courte et une autre impulsion amplifiée 212 longue. L'impulsion amplifiée 211 courte et l'autre impulsion amplifiée 212 longue sont superposées spatialement. De plus, l'impulsion amplifiée 211 courte est superposée temporellement après le délai du système de synchronisation électronique 18 à l'autre impulsion amplifiée 212 longue. Ainsi, le matériau à usiner est exposé au début de l'autre impulsion amplifiée 212 longue pendant une durée égale au délai avant d'être exposé à l'impulsion amplifiée courte 211.

En option, un compresseur 30 reçoit l'impulsion amplifiée 211 courte et l'autre impulsion amplifiée 212 longue superposées. Toutefois, le compresseur 30 est généralement optimisé pour la compression temporelle de l'impulsion amplifiée courte 211 de manière à générer une impulsion amplifiée comprimée 311 de durée courte. L'autre injecteur 12 comprend par exemple une diode nanoseconde à spectre très étroit. Dans ce cas, le compresseur 30 ne comprime pas l'autre impulsion amplifiée 212 longue. On retrouve donc l'autre impulsion amplifiée 212 longue en sortie du compresseur 30. Le compresseur 30 génère donc une superposition de l'autre impulsion amplifiée 212 longue et de l'impulsion amplifiée comprimée 311 qui a une durée courte Tc comprise entre 100 fs et quelques ps. Lorsque la période de répétition de l'injecteur 11 est inférieure à la durée de l'autre impulsion amplifiée longue 212, il est possible de superposer plusieurs impulsions amplifiées comprimées de durée courte à une même impulsion amplifiée longue 212. Ainsi, la figure 8 illustre la superposition de deux impulsions amplifiées comprimées 311, 321 à une même impulsion amplifiée 212 longue. La première impulsion amplifiée comprimée 311 est appliquée avec un délai Δt₂ après le début de l'impulsion amplifiée longue 212. La deuxième impulsion amplifiée comprimée 312 est appliquée avec un délai Δt₁ après la première impulsion amplifiée comprimée 311 est appliquée avec un délai Δt₂. La somme des délais Δt₂ et Δt₁ est inférieure à la durée de l'impulsion amplifiée longue 212. En variante, le compresseur 30 est adapté pour comprimer temporellement l'autre impulsion amplifiée 212, par exemple de durée de l'ordre de la nanoseconde et former une autre impulsion amplifiée comprimée 312 de durée longue de l'ordre de la picoseconde.

En variante, le système laser ne comporte pas de compresseur en aval du système amplificateur optique. Cette variante est particulièrement adaptée au cas où l'injecteur 11 génère des impulsions source 101 ayant une durée de quelques centaines de picosecondes et où l'autre injecteur génère d'autres impulsions source 102 ayant une durée comprise entre quelques nanosecondes et quelques centaines de nanosecondes. Dans ce cas, le système amplificateur optique génère directement une impulsion amplifiée 211 de durée courte, de quelques centaines de picosecondes, superposée temporellement avec une autre impulsion amplifiée 212 de durée longue comprise entre quelques nanosecondes et quelques centaines de nanosecondes.

Selon une autre variante du deuxième mode de réalisation, on dispose en outre une ligne à retard optique 41 dans l'injecteur 11 ou une ligne à retard optique 42 dans l'autre injecteur 12. Cette variante concerne plus particulièrement le cas où l'autre impulsion source 102 a une durée de l'ordre de la ns ou inférieure à 1 ns. L'ajustement de la ligne à retard optique 41 ou 42 permet de positionner correctement la superposition temporelle de l'impulsion source 101 courte et de l'autre impulsion source 102 longue suivant le schéma de la figure 8. On peut aussi prévoir des délais fixes au moyen de fibres optiques de longueur calibrée afin d'obtenir un délai prédéterminé.

Selon encore une autre variante du deuxième mode de réalisation, le système laser comporte en outre un convertisseur optique non-linéaire de fréquence 50 disposé en aval du compresseur 30. Le convertisseur optique non-linéaire de fréquence 50 est par exemple un générateur de fréquence somme, générateur de fréquence double ou plus généralement un générateur d'harmoniques multiples. Le convertisseur optique non-linéaire de fréquence 50 reçoit une impulsions amplifiée comprimée 311 et une autre impulsion amplifiée 212 longue superposées temporellement. Un tel convertisseur optique non-linéaire de fréquence 50 est très sensible à la puissance crête du faisceau incident. En plaçant le (ou les) cristaux doubleurs de fréquence en fin de chaîne, on favorise la conversion de fréquence de l'impulsion comprimée de durée courte plus énergétique, c'est-à-dire de l'impulsion amplifiée comprimée 311, en une impulsion amplifiée convertie en fréquence 511 de durée courte. Dans ce cas, l'autre impulsion amplifiée 212 longue n'est pas convertie en fréquence optique. Le convertisseur optique non-linéaire de fréquence 50 permet ainsi de convertir en fréquence sélectivement l'impulsion amplifiée courte indépendamment de l'autre impulsion amplifiée longue. En variante, le convertisseur optique non-linéaire de fréquence 50 convertit aussi l'autre impulsion amplifiée 212 longue en une autre impulsion amplifiée convertie en fréquence 512 de durée longue.

De préférence, l'injecteur 11 est analogue au système d'injection 10 comprenant un oscillateur 13, un étireur 15 et un modulateur optique 16, et décrit en lien avec la figure 2.

La figure 6 représente un exemple d'autre injecteur 12 utilisé dans le deuxième mode de réalisation. Cet autre injecteur 12 comprend un oscillateur 132, un étireur 152 optionnel et un modulateur optique 162. Dans le cas où l'oscillateur 132 délivre des impulsions femtoseconde, cet oscillateur 132, associé ou non à l'étireur 152, permet de générer l'autre impulsion source 102 de durée longue comprise entre la centaine de femtoseconde et la centaine de picoseconde. Dans le cas où l'oscillateur 132 délivre des impulsions picosecondes, l'utilisation de l'étireur 152 n'est pas requise. Le système de synchronisation électronique 18 synchronise, en temps et en phase, l'oscillateur 132 de l'autre injecteur 12 avec l'oscillateur 13 de l'injecteur 11 par une boucle d'asservissement pilotée (dite « synchro lock » et « phase lock »).

La figure 7 représente un autre exemple d'autre injecteur 12 utilisé dans le deuxième mode de réalisation. Cet autre injecteur 12 comprend une diode laser 14 à grande bande passante et un modulateur optique 162. La diode laser 14 peut aussi être une diode de gain (ou « gain switch » en anglais) dont la durée d'impulsion source courte peut être réduite jusqu'à 30 ps. La diode laser 14 génère directement les autres impulsions source 102 d'une durée nanoseconde. Dans ce cas, un étireur est inutile. La longueur d'onde d'émission de la diode laser 14 est choisie pour être dans la bande passante du système amplificateur optique 20. Dans le cas où le combineur de faisceau 72 est un polariseur, l'état de polarisation de la diode laser 14 est déterminé pour permettre au combineur de faisceau 72 de superposer l'impulsion source courte 101 avec l'impulsion source longue 102. Dans le cas d'un système amplificateur optique à large bande spectrale, tel qu'un amplificateur à fibre optique par exemple, le combineur de faisceau 72 peut aussi être un composant spectral, par exemple un miroir dichroïque ou un filtre interférentiel.

Le système électronique de synchronisation 18 permet de piloter le délai entre l'impulsion source 101 courte générée par l'injecteur 11 et l'autre impulsion source 102 longue générée par l'autre injecteur 12. La précision du système électronique de synchronisation 18 est de l'ordre de 100 ps pour un système électronique FPGA. De façon alternative, on utilise la diode laser 14 en émission continue et le modulateur optique 162 pour moduler l'intensité de la lumière émise par la diode de manière à générer l'autre impulsion source 102 longue. Cette alternative permet d'obtenir une meilleure précision de la superposition de l'impulsion source 101 courte et de l'autre impulsion source 102 longue seulement limitée par la précision du système de synchronisation électronique.

Dans une autre variante, l'autre injecteur 12 est un laser intégré (ou « microchip » en anglais), de type déclenché fonctionnant à une cadence pilotée par la puissance de pompe, par exemple variable entre 100 kHz et 1 MHz. Dans ce cas, l'oscillateur 13 de l'injecteur 11 est synchronisé sur la cadence de ce circuit intégré ou sur un multiple de cette cadence.

La figure 8 illustre un exemple de superposition d'impulsions obtenue au moyen d'un système laser selon le deuxième mode de réalisation, par superposition temporelle d'une impulsion amplifiée 311 courte et d'une autre impulsion amplifiée 212 longue, l'impulsion amplifiée 311 courte étant décalée temporellement d'un retard Δt2 par rapport à l'autre impulsion amplifiée 212 longue. L'impulsion la plus courte, l'impulsion amplifiée 311, a une durée courte Tc comprise entre environ 100 fs et quelques ps. L'autre impulsion amplifiée 212 a une durée longue T_{L} comprise entre 5 ns à plusieurs centaines de ns. Le retard Δt2 est inférieur à la durée de l'autre impulsion amplifiée 212 longue, et de préférence inférieur à la moitié de la durée de l'autre impulsion amplifiée longue 212. De façon optionnelle, au moins une deuxième impulsion amplifiée 321 courte est aussi superposée temporellement avec la même autre impulsion amplifiée 212 longue. Le délai entre l'impulsion amplifiée 311 courte et la deuxième impulsion amplifiée 321 courte est par exemple égal à la période de répétition de l'injecteur 11.

Selon une variante du deuxième mode de réalisation, l'injecteur 11 comporte uniquement un oscillateur 13 délivrant des impulsions femtosecondes et un modulateur optique 16 adapté pour sélectionner une impulsion source courte 101. L'autre injecteur comprend une source gigahertz générant un train (ou « burst » en anglais) de M autres impulsions source gigahertz, M étant un nombre entier naturel, à la cadence de l'oscillateur. Par exemple, l'autre injecteur 12 comprend un oscillateur 132 délivrant un train de M autres impulsions femtoseconde à une cadence gigahertz (GHz), avec un nombre M ajustable. Dans le présent document on entend par cadence gigahertz, une cadence, ou fréquence de répétition, comprise entre 0.1 GHz et quelques dizaines de GHz. Ce type d'oscillateur permet de délivrer directement un train d'autres impulsions source, la durée Tₜ du train d'onde allant de la nanoseconde à la centaine de nanoseconde. Dans le cas où on sélectionne un train de M autres impulsions source, le système de synchronisation électronique 18 éventuellement complété par une ligne à retard optique 41 ou 42 est adapté pour qu'une impulsion source 101 courte soit superposée temporellement avec le train d'autres impulsion l'impulsion source ayant une enveloppe de durée longue. Ainsi, l'enveloppe du train d'autres impulsions source GHz de la source gigahertz peut être superposé temporellement à une impulsion source 101 courte avec un retard relatif Δt2 entre l'impulsion source 101 courte et l'enveloppe du train de M autres impulsions source.

Selon cette variante du deuxième mode de réalisation, le système amplificateur optique 20 amplifie simultanément l'impulsion source 101 courte et le train d'autres impulsions source GHz pour former une impulsion amplifiée 211 et, respectivement, un train d'autres impulsions amplifiées, superposés temporellement avec le retard relatif Δt2. En sortie du système amplificateur optique 20, le compresseur 30 comprime temporellement l'impulsion amplifiée 211 et, respectivement, le train d'autres impulsions amplifiées, et génère une impulsion amplifiée comprimée 311, de durée courte, et, respectivement, un train 220 d'autres impulsions amplifiées comprimées 221, 222,..., 22M. Le train 220 d'autres impulsions amplifiées comprimées a une enveloppe de durée longue. La cadence du 220 d'autres impulsions amplifiées comprimées est identique à la cadence de la source GHz. De cette manière, le matériau à usiner est exposé au début du train 220 d'autres impulsions amplifiées comprimées, le train 220 ayant une enveloppe de durée longue, pendant une durée égale au retard relatif Δt₂ avant d'être exposé à l'impulsion amplifiée comprimée 311, de durée courte.

Le deuxième mode de réalisation a l'avantage de superposer spatialement l'impulsion courte et l'impulsion longue ou le train d'impulsions en amont du système amplificateur optique et du compresseur. Autrement dit, le système laser selon le deuxième mode de réalisation délivre l'impulsion courte et l'impulsion longue, ou respectivement le train d'impulsions, superposées sur une seule et même voie. L'ajustement du retard relatif entre l'impulsion amplifiée comprimée courte et l'impulsion amplifiée longue ou, respectivement le train d'impulsions amplifiées, est effectué dans le système d'injection 11, 12. La durée de l'autre impulsion longue ou du train d'autres impulsions est par exemple dans la gamme de 5 ns à plusieurs centaines de ns.

Le système laser de la présente divulgation permet d'obtenir la superposition d'une ou de plusieurs impulsions amplifiées dites courtes, d'une durée de l'ordre de quelques centaines de femtosecondes, avec une autre impulsion amplifiée dite longue, d'une durée comprise entre quelques dizaines de picosecondes et plusieurs centaines de nanosecondes, l'impulsion courte étant appliquée après un retard par rapport au début de l'impulsion amplifiée longue. Dans un exemple de réalisation, une seule impulsion amplifiée courte est superposée spatialement et temporellement avec une impulsion amplifiée longue.

Selon un exemple du deuxième mode de réalisation, illustré sur la figure 9, une impulsion amplifiée comprimée 311 de durée courte est superposée avec un train 220 de M autres impulsions amplifiées comprimées 221, 222, ..., 22M de durée courte à très haute cadence, de l'ordre du GHz, le train de M autres impulsions amplifiées GHz ayant une enveloppe de durée Tₜ longue, comprise entre quelques dizaines de picosecondes et plusieurs centaines de nanosecondes. Chaque impulsion amplifiée 221, 222, ..., 22M du train a une durée comprise par exemple entre 100 fs et 500 fs. Le début du train d'impulsions 220 est ici défini comme le début de la première impulsion 221 du train 220.

Le système de l'invention permet de superposer temporellement au moins une impulsion amplifiée et comprimée de durée courte et une impulsion amplifiée plus longue, ou respectivement un train d'impulsions amplifiées d'enveloppe longue, en utilisant un seul et même système amplificateur optique. Ce régime hybride à la fois femtoseconde ou picoseconde, pour l'impulsion amplifiée comprimée de durée courte, et picoseconde ou nanoseconde pour l'impulsion amplifiée longue, ou respectivement le train d'impulsions amplifiées d'enveloppe longue, fournit des paramètres supplémentaires pour une maîtrise fine des procédés d'interaction laser-matière.

Bien entendu, diverses autres modifications peuvent être apportées à l'invention dans le cadre des revendications annexées.

## Revendications

1. Système laser impulsionnel comprenant un système d'injection (10, 11, 12), un système amplificateur optique (20) et un combineur de faisceau (71, 72), le système laser impulsionnel étant adapté pour générer, d'une part, une impulsion amplifiée (211, 301, 311, 401, 501) de durée courte (T_{c}) comprise entre 100 fs et quelques centaines de picosecondes et, d'autre part, une autre impulsion amplifiée (202, 212, 302, 402, 502) de durée longue (T_{L}) ou respectivement un train d'autres impulsions amplifiées à une fréquence gigahertz ayant une enveloppe de durée longue (Tₜ), la durée longue (T_{L},Tₜ) étant supérieure à la durée courte (T_{c}) et la durée longue (T_{L},Tₜ) étant comprise entre quelques picosecondes et plusieurs centaines de nanosecondes, l'impulsion impulsion amplifiée (301, 311, 401, 501) de durée courte (Tc) et l'autre impulsion amplifiée (302, 402) de durée longue (T_{L}) ou respectivement le train d'autres impulsions amplifiées (202, 212, 302, 402, 502) d'enveloppe de durée longue (Tₜ) étant issus du même système amplificateur optique (20) et, l'impulsion amplifiée (301, 311, 401, 501) de durée courte (Tc) étant, en sortie du système laser impulsionnel, superposée temporellement avec un retard relatif (Δt₂) avec l'autre impulsion amplifiée (202, 302, 402, 502) de durée longue (T_{L}) ou respectivement le train d'autres impulsions amplifiées d'enveloppe de durée longue (Tₜ), le retard relatif (Δt₂) étant inférieur ou égal à la durée longue (T_{L}, Tₜ), l'autre impulsion amplifiée (202, 212, 302, 402, 502) de durée longue (T_{L}) ou respectivement le train d'autres impulsions amplifiées étant à une cadence comprise entre 100 kHz et 2 MHz et l'impulsion amplifiée (211, 301, 311, 401, 501) de durée courte (T_{c}) étant à ladite cadence ou à un multiple de ladite cadence et le retard relatif (Δt₂) étant ajustable.

2. Système laser impulsionnel selon la revendication 1 dans lequel le système d'injection (10) est adapté pour générer une impulsion source (100), le système amplificateur optique (20) est adapté pour recevoir l'impulsion source (100) et pour générer une impulsion amplifiée (200), le système laser impulsionnel comprenant un séparateur de faisceau (60) ayant une branche d'entrée, une branche de sortie et une autre branche de sortie, le séparateur de faisceau (60) étant disposé pour diviser l'impulsion amplifiée (200) et former une impulsion amplifiée divisée (201) sur la branche de sortie et une autre impulsion amplifiée divisée (202) sur l'autre branche de sortie, un compresseur (30) étant disposé sur la branche de sortie et adapté pour recevoir l'impulsion amplifiée divisée (201) et générer une impulsion amplifiée comprimée (301) de durée courte (Tc), une ligne à retard optique (40) étant disposée sur la branche de sortie ou sur l'autre branche de sortie pour induire le retard relatif (Δt₂) et le combineur de faisceau (71) ayant une entrée reliée à la branche de sortie du séparateur de faisceau (60) pour recevoir l'impulsion amplifiée comprimée (301) de durée courte (Tc) et une autre entrée reliée à l'autre branche de sortie du séparateur de faisceau (60) pour recevoir l'autre impulsion amplifiée divisée (202) de durée longue (T_{L}).

3. Système laser impulsionnel selon la revendication 2 comportant en outre un autre compresseur (32) disposé sur l'autre branche de sortie en amont du combineur de faisceau (71), l'autre compresseur (32) étant adapté pour comprimer temporellement l'autre impulsion amplifiée divisée (202).

4. Système laser impulsionnel selon la revendication 2 ou 3 comportant un système optique non linéaire (52) disposé sur l'autre branche de sortie du séparateur de faisceau (60) en amont du combineur de faisceau (71), le système optique non linéaire (52) étant adapté pour convertir en longueur d'onde l'autre impulsion amplifiée divisée (202).

5. Système laser impulsionnel selon la revendication 1 dans lequel le système d'injection (10, 11, 12) comprend un injecteur (11), un autre injecteur (12) et un système de synchronisation électronique (18) entre l'injecteur (11) et l'autre injecteur (12), l'injecteur (11) étant adapté pour générer une impulsion source (101) de durée courte comprise entre 100 fs et quelques centaines de picosecondes, l'autre injecteur (12) étant adapté pour générer une autre impulsion source (102) de durée longue, la durée longue étant comprise entre 5 ns et plusieurs centaines de ns, le système de synchronisation électronique (18) étant adapté pour induire un retard entre l'impulsion source (101) et l'autre impulsion source (102) inférieur ou égal à la durée longue, le combineur de faisceau (72) étant adapté pour superposer spatialement et temporellement l'impulsion source (101) et l'autre impulsion source (102), le système amplificateur optique (20) étant adapté pour recevoir l'impulsion source (101) et l'autre impulsion source (102) superposées temporellement et pour générer une impulsion amplifiée (211) de durée courte et une autre impulsion amplifiée (212) de durée longue superposées temporellement.

6. Système laser impulsionnel selon la revendication 5 comprenant un compresseur (30) disposé en aval du système amplificateur optique (20), le compresseur (30) étant adapté pour recevoir l'impulsion amplifiée (211) de durée courte et générer une impulsion amplifiée comprimée (301) de durée courte.

7. Système laser impulsionnel selon la revendication 5 ou 6 dans lequel l'autre injecteur (12) comporte un oscillateur (132) ou une diode laser (14) ou une source laser sur circuit intégré.

8. Système laser impulsionnel selon la revendication 1 dans lequel le système d'injection (10, 11, 12) comprend un injecteur (11), une source gigahertz et un système de synchronisation électronique (18) entre l'injecteur (11) et la source gigahertz, l'injecteur (11) étant adapté pour générer une impulsion source (101) de durée courte comprise entre 100 fs et quelques centaines de picosecondes, la source gigahertz étant adaptée pour générer un train d'autres impulsions source gigahertz à une cadence comprise entre 0.1 gigahertz et quelques dizaines de gigahertz, le train d'autres impulsions source ayant une enveloppe de durée longue (Tₜ) comprise entre 5 ns et plusieurs centaines de ns, le système de synchronisation électronique (18) étant adapté pour induire un retard entre l'impulsion source (101) et le train d'impulsions source gigahertz, le combineur de faisceau (72) étant adapté pour superposer spatialement et temporellement l'impulsion source (101) et le train d'autres impulsions source gigahertz, le système amplificateur optique (20) étant adapté pour recevoir l'impulsion source (101) et le train d'autres impulsions source gigahertz superposés temporellement et pour générer l'impulsion amplifiée (211) superposée temporellement avec le train d'autres impulsions amplifiées, un compresseur (30) étant adapté pour recevoir l'impulsion amplifiée (211) et générer une impulsion amplifiée comprimée (311).

9. Système laser impulsionnel selon l'une des revendications 5 à 8 dans lequel l'injecteur (11) comporte un oscillateur et un modulateur optique.

10. Système laser impulsionnel selon l'une des revendications 5 à 8 comprenant un dispositif de retard optique (41, 42) disposé en amont du combineur de faisceau (72).

11. Système laser impulsionnel selon l'une des revendications 1 à 10 comportant un atténuateur optique (80, 81, 82) ou un modulateur optique (16, 162) adapté pour moduler en amplitude l'impulsion amplifiée (301, 311) de durée courte et/ou l'autre impulsion amplifiée (302, 402), respectivement le train d'autres impulsions amplifiées.

12. Système laser impulsionnel selon l'une des revendications 1 à 11 dans lequel le combineur de faisceau (71, 72) est un choisi parmi un coupleur optique, un polariseur, un composant dichroïque, un filtre interférentiel ou un composant optique non linéaire.

13. Système laser impulsionnel selon l'une des revendications 1 à 12 comportant un convertisseur optique non linéaire de fréquence (50) disposé pour recevoir l'impulsion amplifiée (301, 311) de durée courte et générer une impulsion amplifiée convertie en longueur d'onde (501) de durée courte.

## Patentansprüche

1. Impulslasersystem mit einem Einleitungssystem (10, 11, 12), einem optischen Verstärkersystem (20) und einem Strahlkombinierer (71, 72), wobei das Impulslasersystem dazu ausgelegt ist, einerseits einen verstärkten Impuls (211, 301, 311, 401, 501) mit einer kurzen Dauer (T_{C}) zwischen 100 fs und einigen Hundert Pikosekunden und andererseits einen weiteren verstärkten Impuls (202, 212, 302, 402, 502) großer Dauer (T_{L}) oder eine Folge weiterer verstärkter Impulse bei einer Gigahertz-Frequenz mit einer Hülle großer Dauer (Tt) zu erzeugen, wobei die große Dauer (T_{L}, Tₜ) größer als die kurze Dauer (T_{C}) ist und die große Dauer (T_{L}, Tₜ) zwischen einigen Pikosekunden und mehreren Hundert Nanosekunden beträgt, wobei der verstärkte Impuls (301, 311, 401, 501) kurzer Dauer (T_{C}) und der weitere verstärkte Impuls (302, 402) großer Dauer (T_{L}) oder die Folge weiterer verstärkter Impulse (202, 212, 302, 402, 502) mit einer Hülle großer Dauer (Tt) aus demselben optischen Verstärkersystem (20) kommen, und wobei der verstärkte Impuls (301, 311, 401, 501) kurzer Dauer (T_{C}) am Ausgang des Impulslasersystems zeitlich mit einer relativen Verzögerung (Δt₂) mit dem weiteren verstärkten Impuls (202, 302, 402, 502) großer Dauer (T_{L}) oder der Folge weiterer verstärkter Impulse mit einer Hülle großer Dauer (Tₜ) überlagert wird, wobei die relative Verzögerung (Δt₂) kleiner als oder gleich der großen Dauer (T_{L}, Tₜ) ist, wobei der weitere verstärkte Impuls (202, 212, 302, 402, 502) großer Dauer (T_{L}) oder die Folge weiterer verstärkter Impulse eine Kadenz zwischen 100 kHz und 2 MHz aufweist und der verstärkte Impuls (211, 301, 311, 401, 501) kurzer Dauer (T_{C}) die gleiche Kadenz oder ein Vielfaches davon haben und die relative Verzögerung (Δt₂) einstellbar ist.

2. Impulslasersystem gemäß Anspruch 1, wobei das Einleitungssystem (10) dazu ausgelegt ist, einen Quellimpuls (100) zu erzeugen, wobei das optische Verstärkersystem (20) dazu ausgelegt ist, den Quellimpuls (100) zu empfangen und einen verstärkten Impuls (200) zu erzeugen, wobei das Impulslasersystem einen Strahlteiler (60) aufweist, der einen Eingangszweig, einen Ausgangszweig und einen weiteren Ausgangszweig aufweist, wobei der Strahlteiler (60) so angeordnet ist, daß er den verstärkten Impuls (200) teilt und einen geteilten verstärkten Impuls (201) auf dem Ausgangszweig und einen weiteren geteilten verstärkten Impuls (202) auf dem weiteren Ausgangszweig bildet, wobei ein Kompressor (30) auf dem Ausgangszweig angeordnet ist und dazu ausgelegt ist, den geteilten verstärkten Impuls (201) zu empfangen und einen komprimierten verstärkten Impuls (301) kurzer Dauer (T_{c}) zu bilden, wobei eine optische Verzögerungsleitung (40) auf dem Ausgangszweig oder auf dem weiteren Ausgangszweig angeordnet ist, um die relative Verzögerung (Δt₂) einzubringen, und wobei der Strahlkombinierer (71) mit einem Eingang mit dem Ausgangszweig des Strahlteilers (60) verbunden ist, um den komprimierten verstärkten Impuls (301) kurzer Dauer (T_{C}) zu empfangen, und mit einem weiteren Eingang mit dem weiteren Ausgangszweig des Strahlteilers (60) verbunden ist, um den weiteren geteilten verstärkten Impuls (202) großer Dauer (T_{L}) zu empfangen.

3. Impulslasersystem gemäß Anspruch 2 mit einem weiteren, auf dem weiteren Ausgangszweig stromaufwärts des Strahlkombinierers (71) angeordneten Kompressor (32), wobei der weitere Kompressor (32) dazu ausgelegt ist, den weiteren geteilten verstärkten Impuls (202) zeitlich zu komprimieren.

4. Impulslasersystem gemäß Anspruch 2 oder 3 mit einem auf dem weiteren Ausgangszweig des Strahlteilers (60) stromaufwärts des Strahlkombinierers (71) angeordneten nicht linearen optischen System (52), wobei das nicht lineare optische System (52) dazu ausgelegt ist, den weiteren geteilten verstärkten Impuls (202) hinsichtlich der Wellenlänge zu konvertieren.

5. Impulslasersystem gemäß Anspruch 1, wobei das Einleitungssystem (10, 11, 12) ein Einleitungsorgan (11), ein weiteres Einleitungsorgan (12) und ein elektronisches Synchronisationssystem (18) zwischen dem Einleitungsorgan (11) und dem weiteren Einleitungsorgan (12) aufweist, wobei das Einleitungsorgan (11) dazu ausgelegt ist, einen Quellimpuls (101) mit einer kurzen Dauer zwischen 100 fs und einigen Hundert Pikosekunden zu erzeugen, wobei das weitere Einleitungsorgan (12) dazu ausgelegt ist, einen weiteren Quellimpuls (102) großer Dauer zu erzeugen, wobei die große Dauer zwischen 5 ns und einigen Hundert ns beträgt, wobei das elektrische Synchronisationssystem (18) dazu ausgelegt ist, zwischen dem Quellimpuls (101) und dem weiteren Quellimpuls (102) eine Verzögerung von weniger als oder gleich der großen Dauer einzubringen, wobei der Strahlkombinierer (72) dazu ausgelegt ist, den Quellimpuls (101) und den weiteren Quellimpuls (102) räumlich und zeitlich zu überlagern, wobei das optische Verstärkersystem (20) dazu ausgelegt ist, den Quellimpuls (101) und den zeitlich überlagerten weiteren Quellimpuls (102) zu empfangen und einen verstärkten Impuls (211) kurzer Dauer und einen zeitlich überlagerten weiteren verstärkten Impuls (212) großer Dauer zu erzeugen.

6. Impulslasersystem gemäß Anspruch 5 mit einem stromabwärts des optischen Verstärkersystems (20) angeordneten Kompressor (30), wobei der Kompressor (30) dazu ausgelegt ist, den verstärkten Impuls (211) kurzer Dauer zu empfangen und einen komprimierten verstärkten Impuls (301) kurzer Dauer zu erzeugen.

7. Impulslasersystem gemäß Anspruch 5 oder 6, wobei das weitere Einleitungsorgan (12) einen Oszillator (132) oder eine Laserdiode (14) oder eine Laserquelle in einer integrierten Schaltung aufweist.

8. Impulslasersystem gemäß Anspruch 1, wobei das Einleitungssystem (10, 11, 12) ein Einleitungsorgan (11), eine Gigahertzquelle und ein elektronisches Synchronisationssystem (18) zwischen dem Einleitungsorgan (11) und der Gigahertzquelle aufweist, wobei das Einleitungsorgan (11) dazu ausgelegt ist, einen Quellimpuls (101) mit einer kurzen Dauer zwischen100 fs und einigen Hundert Pikosekunden zu erzeugen, wobei die Gigahertzquelle dazu ausgelegt ist, eine Folge weiterer Gigahertzquellimpulse mit einer Kadenz zwischen 0,1 Gigahertz und einigen Zehn Gigahertz zu erzeugen, wobei die Folge weiterer Quellimpulse eine Hülle langer Dauer (Tt) zwischen 5 ns und mehreren Hundert ns aufweist, wobei das elektronische Synchronisationssystem (18) dazu ausgelegt ist, eine Verzögerung zwischen dem Quellimpuls (101) und der Folge weiterer Gigahertzquellimpulse einzubringen, wobei der Strahlkombinierer (72) dazu ausgelegt ist, den Quellimpuls (101) und die Folge weitere Gigahertzquellimpulse räumlich und zeitlich zu überlagern, wobei das optische Verstärkersystem (20) dazu ausgelegt ist, den Quellimpuls (101) und die überlagerte Folge weiterer Gigahertzquellimpulse zu empfangen und den mit der Folge weiterer verstärkter Impulse zeitlich überlagerten verstärkten Impuls (211) zu erzeugen, wobei ein Kompressor (30) dazu ausgelegt ist, den verstärkten Impuls (211) zu empfangen und einen komprimierten verstärkten Impuls (311) zu erzeugen.

9. Impulslasersystem gemäß einem der Ansprüche 5 bis 8, wobei das Einleitungsorgan (11) einen Oszillator und einen optischen Modulator aufweist.

10. Impulslasersystem gemäß einem der Ansprüche 5 bis 8 mit einer stromaufwärts des Strahlkombinierers (72) angeordneten optischen Verzögerungsvorrichtung (41, 42).

11. Impulslasersystem gemäß einem der Ansprüche 1 bis 10 mit einem optischen Dämpfungsorgan (80, 81, 82) oder einem optischen Modulator (16, 162), der dazu ausgelegt ist, den verstärkten Impuls (301, 311) kurzer Dauer und/oder den weiteren verstärkten Impuls (302, 402) beziehungsweise die Folge weiterer verstärkter Impulse hinsichtlich der Amplitude zu modulieren.

12. Impulslasersystem gemäß einem der Ansprüche 1 bis 11, wobei der Strahlkombinierer (71, 72) aus einem optischen Koppler, einem Polarisator, einem dichroischen Bauelement, einem Interferenzfilter oder einem nicht linearen optischen Bauelement ausgewählt ist.

13. Impulslasersystem gemäß einem der Ansprüche 1 bis 12 mit einem nicht linearen optischen Frequenzwandler (50), der dazu ausgelegt ist, den verstärkten Impuls (301, 311) kurzer Dauer zu empfangen und einen hinsichtlich der Wellenlänge gewandelten verstärkten Impuls (501) kurzer Dauer zu erzeugen.

## Claims

1. A pulse laser system comprising an injection system (10, 11, 12), an optical amplifier system (20) and a beam combiner (71, 72), the pulse laser system being adapted to generate, on the one hand, an amplified pulse (211, 301, 311, 401, 501) of short duration (T_{c}) comprised between 100 fs and a few hundred picoseconds and, on the other hand, another amplified pulse (202, 212, 302, 402, 502) of long duration (T_{L}) or respectively a burst of other pulses amplified at a gigahertz frequency having a long duration envelope (Tₜ), the long duration (T_{L}, Tₜ) being greater than the short duration (T_{c}) and the long duration (T_{L}, Tₜ) being comprised between a few picoseconds and several hundred nanoseconds, the amplified pulse (301, 311, 401, 501) of short duration (T_{c}) and the other amplified pulse (302, 402) of long duration (T_{L}) or respectively the burst of other amplified pulses (202, 212, 302, 402, 502) of long duration envelope (Tₜ) being from the same optical amplifier system (20) and, the amplified pulse (301, 311, 401, 501) of short duration (T_{c}) being, at the output of the pulse laser system, temporally overlapped with a relative delay (Δt₂) with the other amplified pulse (202, 302, 402, 502) of long duration (T_{L}) or respectively the burst of other amplified pulses of long duration envelope (Tₜ), the relative delay (Δt₂) being less than or equal to the long duration (T_{L}, Tₜ), the other amplified pulse (202, 302, 402, 502) of long duration (T_{L}) or respectively the burst of other amplified pulses being at a rate comprised between 100 kHz and 2 MHz and the amplified pulse (301, 311, 401, 501) of short duration (T_{c}) being at said rate or at a multiple of said rate and the relative delay (Δt₂) being adjustable.

2. The pulse laser system according to claim 1, wherein the injection system (10) is adapted to generate a source pulse (100), the optical amplifier system (20) is adapted to receive the source pulse (100) and to generate an amplified pulse (200), the pulse laser system comprising a beam splitter (60) having an input branch, an output branch and another output branch, the beam splitter (60) being disposed to divide the amplified pulse (200) and form a divided amplified pulse (201) on the output branch and another divided amplified pulse (202) on the other output branch, a compressor (30) being disposed on the output branch and adapted to receive the divided amplified pulse (201) and generate a compressed amplified pulse (301) of short duration (T_{c}), an optical delay line (40) being disposed on the output branch or on the other output branch to induce the relative delay (Δt₂) and the beam combiner (71) having an input connected to the output branch of the beam splitter (60) in order to receive the compressed amplified pulse (301) of short duration (T_{c}) and another input connected to the other output branch of the beam splitter (60) in order to receive the other divided amplified pulse (202) of long duration (T_{L}).

3. The pulse laser system according to claim 2, further including another compressor (32) disposed on the other output branch upstream of the beam combiner (71), the other compressor (32) being adapted to temporally compress the other divided amplified pulse (202).

4. The pulse laser system according to claim 2 or 3, including a nonlinear optical system (52) disposed on the other output branch of the beam splitter (60) upstream of the beam combiner (71), the nonlinear optical system (52) being adapted to wavelength-convert the other divided amplified pulse (202).

5. The pulse laser system according to claim 1, wherein the injection system (10, 11, 12) comprises an injector (11), another injector (12) and an electronic synchronisation system (18) between the injector (11) and the other injector (12), the injector (11) being adapted to generate a source pulse (101) of short duration comprised between 100 fs and a few hundred picoseconds, the other injector (12) being adapted to generate another source pulse (102) of long duration, the long duration being comprised between 5 ns and several hundred ns, the electronic synchronisation system (18) being adapted to induce a delay between the source pulse (101) and the other source pulse (102) which is less than or equal to the long duration, the beam combiner (72) being adapted to spatially and temporally overlap the source pulse (101) and the other source pulse (102), the optical amplifier system (20) being adapted to receive the source pulse (101) and the other source pulse (102) which are temporally overlapped and to generate an amplified pulse (211) of short duration and another amplified pulse (212) of long duration which are temporally overlapped.

6. The pulse laser system according to claim 5, comprising a compressor (30) disposed downstream of the optical amplifier system (20), the compressor (30) being adapted to receive the amplified pulse (211) of short duration and generate a compressed amplified pulse (301) of short duration.

7. The pulse laser system according to claim 5 or 6, wherein the other injector (12) includes an oscillator (132) or a laser diode (14) or an integrated circuit laser source.

8. The pulse laser system according to claim 1, wherein the injection system (10, 11, 12) comprises an injector (11), a gigahertz source and an electronic synchronisation system (18) between the injector (11) and the gigahertz source, the injector (11) being adapted to generate a source pulse (101) of short duration comprised between 100 fs and a few hundred picoseconds, the gigahertz source being adapted to generate a burst of other gigahertz source pulses at a rate comprised between 0.1 gigahertz and a few tens of gigahertz having a long duration envelope (Tₜ) comprised between 5 ns and several hundred ns, the electronic synchronisation system (18) being adapted to induce a delay between the source pulse (101) and the gigahertz source pulse burst, the beam combiner (72) being adapted to spatially and temporally overlap the source pulse (101) and the burst of other gigahertz source pulses, the optical amplifier system (20) being adapted to receive the source pulse (101) and the burst of other gigahertz source pulses which are temporally overlapped and to generate the amplified pulse (211) which is temporally overlapped with the burst of other amplified pulses, a compressor (30) being adapted to receive the amplified pulse (211) and generate a compressed amplified pulse (311).

9. The pulse laser system according to any one of claims 5 to 8, wherein the injector (11) includes an oscillator and an optical modulator.

10. The pulse laser system according to any one of claims 5 to 8, comprising an optical delay device (41, 42) disposed upstream of the beam combiner (72).

11. The pulse laser system according to any one of claims 1 to 10, including an optical attenuator (80, 81, 82) or an optical modulator (16, 162) adapted to amplitude modulate the amplified pulse (301, 311) of short duration and/or the other amplified pulse (302, 402), respectively the burst of other amplified pulses.

12. The pulse laser system according to any one of claims 1 to 11, wherein the beam combiner (71, 72) is one selected from an optical coupler, a polariser, a dichroic component, an interference filter or a nonlinear optical component.

13. A pulse laser system according to any one of claims 1 to 12, including a nonlinear optical frequency converter (50) disposed to receive the amplified pulse (301, 311) of short duration and generate a wavelength-converted amplified pulse (501) of short duration.
